# EUROPÄISCHE PATENTSCHRIFT

(11) **EP 2 500 442 B1**
(45) Veröffentlichungstag und Bekanntmachung des Hinweises auf die Patenterteilung: **09.11.2016**
(21) Anmeldenummer: 12001408.9
(22) Anmeldetag: 01.03.2012
(51) Int. Cl.: C22B 11/00

(54) **Prozess zur Rückgewinnung von Edelmetall aus funktionalisierten edelmetallhaltigen Adsorptionsmaterialien**
Process for recovery of precious metal from functionalised absorption materials containing precious metals
Procédé de récupération de métaux précieux issus de matériaux d'adsorption fonctionnalisés contenant des métaux précieux

(30) Priorität: 18.03.2011 DE 102011014505
(43) Veröffentlichungstag der Anmeldung: 19.09.2012
(73) Patentinhaber: Heraeus Deutschland GmbH & Co. KG, 63450 Hanau (DE)
(72) Erfinder: Kralik, Joachim, 63450 Hanau (DE); Stettner, Martin, 63674 Altenstadt (DE); Fuchs Alameda, Stefanie, 63599 Biebergemünd-Bieber (DE)
(74) Vertreter: Heraeus IP

(56) Entgegenhaltungen:
- EP-A2- 0 304 231
- EP-A2- 1 321 534
- CN-A- 1 067 925
- DE-A1- 2 036 841
- GB-A- 2 269 376
- GB-A- 2 358 874

## Beschreibung

Die Erfindung betrifft ein Verfahren zur Rückgewinnung von Edelmetallen aus edelmetallhaltigen Zusammensetzungen.

Bei zahlreichen industriellen Vorgängen fallen edelmetallhaltige Rückstände an, bei denen der Edelmetallgehalt hoch genug ist, um dieses in wirtschaftlich sinnvoller Weise zurück zu gewinnen. Solche Rückstände sind beispielsweise Schlämme, Gekrätze, Polierstäube, Produktionsrückstände aus Industrieanlagen, in denen edelmetallhaltige Katalysatorrückstände enthalten sind, und ähnliches.

Es sind zahlreiche Verfahren bekannt, um aus solchen Zusammensetzungen das enthaltene Edelmetall zurückzugewinnen. Ein sehr häufig angewandtes Verfahren, welches auch mit sehr hohen Wirkungsgraden funktioniert, Ist die sogenannte Cyanidlaugerei, welches insbesondere bei der Rückgewinnung von Gold eingesetzt wird. Hier werden die goldhaltigen Zusammensetzungen mit einer Natrium- oder Kalium-Cyanidlauge versetzt, wobei sich das darin enthaltene Gold und teilweise auch andere Edelmetalle in der Lauge lösen. Im Falle von Gold liegt dieses in ionischer Form Komplex gebunden in wässriger Lösung vor. In einem zweiten Verfahrensschritt kann das Gold dann elektrolytisch aus der Lösung abgeschieden werden. Dieses Verfahren funktioniert technisch gesehen sehr gut, hat jedoch den entscheidenden Nachteil, dass mit großen Mengen hochgiftigen Cyanldes umgegangen werden muss, was aus Umweltschutzgründen und aus Gründen des Gesundheitsschutzes der hiermit befassten Personen äußerst problematisch ist.

Um diesem Problem entgegenzuwirken, ist bereits versucht worden, auf andere Komplexbildner wie beispielsweise Thioharnstoff auszuweichen. Hier tritt jedoch insbesondere das Problem auf, dass die Oberflächen der aufzulösenden Metallpartikel durch die Bildung kolloidalen Schwefels rasch passiviert werden, was die Verfahrenseffizienz drastisch reduziert. Verfahren mit dem Einsatz von Thiohamstoff als Komplexbildner konnten deshalb in industriellen Metallrecyclingverfahren bisher keine wirtschaftliche Bedeutung erlangen.

Ein weiterer beispielsweise in der WO-A-2006/013060 beschriebener Ansatz zur Rückgewinnung von Edelmetallen liegt in einem Einsatz sogenannter Scavengermaterialien. Häufig werden hier auf Kieselgel oder Aluminiumoxid-Gel basierende anorganische Materialien eingesetzt, die mit organischen Komplexbildnem funktionalisiert sind und bei einem Kontakt mit edelmetallhaltigen Lösungen die Edelmetalle adsorbieren. Aus den so erhaltenen Scheidgütem werden sodann in weiteren Aufarbeitungsschritten die adsorbierten Edelmetalle isoliert. Der erste Schritt der Isolierung der Edelmetalle aus derartigen Scheidgütem besteht darin, diese in Lösung zu bringen. Werden auf Kieselgel basierende Scavengermaterialien eingesetzt, so ist ein direktes *"Leachen"* durch die Behandlung mit oxidierenden Säuren, wie es beispielsweise in der EP-A-1 576 200 oder der US 4,360,380 beschrieben ist, aufgrund des hohen Gehaltes an Kieselgel nicht effektiv genug für das quantitative Entfernen der adsorbierten Edelmetalle. Es bleiben größere Mengen Edelmetall auf dem Träger zurück und können nicht ohne Weiteres in Lösung gebracht werden. Auch die Behandlung der Scheidgüter mit Komplexbildnern wie Thiohamstoff führt nur zu einer teilweisen Elution der am Kieselgel adsorbierten Edelmetalle (siehe etwa *"*Recovery of rhodium-containing catalysts by silica-based chelating ion exchangers containing N and S donor atome". Kramer et al.. Inorganica Chimica Acta (2001), Bd. 315(2), Seiten 183-190).

Weiterhin beschreiben die Dokumente EP 1321534 A2, CN 1067 925 A und GB 2 358 874 A Verfahren zur Gewinnung von Edelmetallen aus Feststoffen.

Der vorliegenden Erfindung lag die Aufgabe zugrunde, die sich aus dem Stand der Technik ergebenden Nachteile im Zusammenhang mit dem Abscheiden von Edelmetallen aus organisch funktionalisierten Scavengermaterialien, insbesondere aus auf Kieseigel oder Aluminiumoxid-Gel basierenden anorganischen Materialen, die mit Komplexbildnem funktionalisiert sind, zu überwinden.

Insbesondere lag der vorliegenden Erfindung die Aufgabe zugrunde, ein Verfahren zum Abscheiden von Edelmetallen aus derartigen Scavengermaterialien anzugeben, mit dem im Vergleich zu den aus dem Stand der Technik bekannten Verfahren eine effektivere Abscheidung der Edelmetalle möglich ist

Einen Beitrag zur Lösung der eingangs genannten Aufgaben leistet ein Verfahren zur Gewinnung von Edelmetallen aus edelmetallhaltigen Zusammensetzungen, beinhaltend die Verfahrensschritte:
i) Bereitstellung einer edelmetallhaltigen Zusammensetzung beinhaltend ein auf einem anorganischen Material basierendes Adsorptionsmittel, welches mit organischen Gruppen funktionalisiert ist und welches mindestens ein Edelmetall adsorbiert hat;
ii) Veraschung der im Verfahrensschritt I) bereitgestellten edelmetallhaltigen Zusammensetzung, um einen Gehalt an Rest-Kohlenstoff von höchstens 10 Gew.-%, besonders bevorzugt von höchstens 5 Gew.-%, noch mehr bevorzugt von höchstens 3,5 Gew.-% und am meisten bevorzugt von höchstens 2,0 Gew.-%, jeweils bezogen auf das Gesamtgewicht der edelmetallhaltigen Zusammensetzung nach dem Veraschen, einzustellen, unter Erhalt einer veraschten Zusammensetzung;
iii) zumindest teilweises Auflösen der im Verfahrensschritt ii) erhaltenen, veraschten Zusammensetzung In einer alkalischen, wässrigen Lösung unter Erhalt eines edelmetallhaltigen Rückstandes;
iv) zumindest teilweises Auflösen des im Verfahrensschritt iii) erhaltenen edelmetallhaltigen Rückstandes in einer oxidierenden, wässrigen Säure unter Erhalt einer wässrigen Salzlösung des Edelmetalls;
v) gegebenenfalls Gewinnung des Edelmetalls durch Reduktion des im Verfahrensschritt iv) erhaltenen Edelmetall-Salzes.

Im Verfahrensschritt i) des erfindungsgemäßen Verfahrens wird zunächst eine edelmetallhaltige Zusammensetzung beinhaltend ein auf einem anorganischen Material basierendes Adsorptionsmittel bereitgestellt, welches mit organischen Gruppen funktionalisiert ist und welches mindestens ein Edelmetall adsorbiert hat

Als funktionalisierte, auf einem anorganischen Material basierende Adsorptionsmittel kommen alle dem Fachmann bekannten Materialien In Betracht, die üblicherweise als Scavengermaterialien bei der Rückgewinnung von Edelmetallen aus industriellen Rückständen eingesetzt werden. Vorzugsweise handelt es sich bei diesen Materialien um anorganische Gele, welche vorzugsweise auf Siliziumoxiden oder Aluminiumoxiden basieren. Besonders bevorzugte Adsorptionsmittel sind solche, welche auf einem Kieselgel oder einem Aluminiumoxid-Gel basieren, wobei der Einsatz eines auf einem Kieselgel basierenden Adsorptionsmittels ganz besonders bevorzugt ist. Ganz besonders bevorzugt in diesem Zusammenhang sind Kieselgele, welche mit Schwefel- und/oder Stickstoff beinhaltenden organischen Gruppen funktionalisiert sind, wobei hier mit Thiol- oder Sulfid-Gruppen funktionalisierte Kieselgele ganz besonders bevorzugt sind.

Als Beispiele für geeignete, mit organischen Gruppen funktionalisierte Kieselgele seien beispielsweise die von der Firma Biotage AG, Schweden, unter der Handelsbezeichnung ISOLUTE^{®} erhältlichen funktionalisierten Kieselgele genannt. Bei diesen Kieselgelen handelt es sich beispielsweise um ein mit 2,4,6-Trimercaptotriazin-Gruppen funktionalisiertes Kieselgel (ISOLUTE^{®} SI-TMT), um ein mit Carbonat-Gruppen funktionalisiertes Kieselgel (ISOLUTE^{®} SIKarbonat), um ein mit Thiol-Gruppen, beispielsweise mit 1-Propanethiol-Gruppen funktionalisiertes Kieselgel (ISOLUTE^{®} SI-Thiol), um ein mit Triamin-Gruppen, beispielsweise mit 3-(Diethylentriamin)propyl-Gruppen funktionalisiertes Kieselgel (ISOLUTE^{®} SI-Triamin) oder um ein mit Sulfonsäuregruppen funktionarisiertes Kieselgel, beispielsweise um ein mit Ethylbenzolsulfonylhydrazin-Gruppen (ISOLUTE^{®} SI-Tosyl-Hydrazin), mit Methylbenzolsulfonsäure-Gruppen (ISOLUTE^{®} SI-TsOH) oder mit Propylsulfonsäure-Gruppen (ISOLUTE^{®} SI-Propylsuffonsäure) funktionalisiertes Kieselgel. Weiterhin zu nennen sind diejenigen funktionalisierten Kieselgele, die beispielsweise unter den Handelsbezeichnungen SilicaBond^{®}, PhosphonicS™ oder QuadraSil™ erhältlich sind. Unter den unter der Handelsbezeichnung PhosphonicS™ erhältlichen Scavengermaterialien sind insbesondere die mit N-Acetyl-L-Cystein-Gruppen funktionalisierten Kieselgel (Produktnummer 16-0200), die mit 2-Aminoethylsulfidethyl-Gruppen funktionalisierten Kieselgele (Produktnummer 16-0215), die mit 2-Mercaptoethylethylsulfid-Gruppen funktionalisierten Kieselgele (Produktnummer 16-0650), die mit 3-Mercaptopropylethylsulfid-Gruppen funktionalisierten Kieselgele (Produktnummer 16-1700, 16-1706, 16-1702 und 16-1704), die mit Oentaerythritol-2-mercaptoacetatethylsulfid-Gruppen funktionalisierten Kieselgele (Produktnummer 16-1540) und die mit Triaminethylsulfidamid-Gruppen funktionalisierten Kieselgele (Produktnummer 16-0210) bevorzugt.

Derartige, funktionalisierte Kieselgel-Materialien liegen üblicherweise als partikulärer Feststoff vor, welcher zu mindestens 50 Gew.-%, besonders bevorzugt zu mindestens 75 Gew.-%, noch mehr bevorzugt zu mindestens 90 Gew.-% und am meisten bevorzugt zu 100 Gew.-%, jeweils bezogen auf das eingesetzte, funktionalisierte Kieselgel-Material, auf Partikel mit einer Partikelgröße in einem Bereich von 100 bis 1000 µm, besonders bevorzugt 200 bis 800 µm und am meisten bevorzugt 300 bis 600 µm basiert.

Üblicherweise sind solche auf einem anorganischen Material basierende Adsorptionsmittel, insbesondere solche auf Kieselgel basierenden Adsorptionsmittel, mit 0,1 bis 10 mmol/g, besonders bevorzugt mit 0,25 bis 5 mmol/g und am meisten bevorzugt mit 0,5 bis 1,5 mmol/g organischen Gruppen funktionalisiert.

Das in der im Verfahrensschritt i) bereitgestellten Zusammensetzung enthaltene, auf einem anorganischen Material basierende, mit organischen Gruppen funktionalisierte Adsorptionsmittel, vorzugsweise die vorstehend beschriebenen, mit organischen Gruppen funktionalisierten Kieselgele haben mindestens ein Edelmetall adsorbiert, wobei es bevorzugt ist, dass das die im Verfahrensschritt i) bereitgestellte edelmetallhaltige Zusammensetzung mindestens 0,5 Gew.-%, besonders bevorzugt mindestens 1,0 Gew.-% und am meisten bevorzugt mindestens 1,5 Gew.-%, jeweils bezogen auf das Gesamtgewicht der im Verfahrensschritt i) bereitgestellten edelmetallhaltigen Zusammensetzung, des Edelmetalls enthält. Grundsätzlich können mittels des erfindungsgemäßen Verfahrens edelmetallhaltige Zusammensetzungen eingesetzt werden, die bis zu 10 Gew.-% oder mehr an Edelmetall enthalten. In diesem Zusammenhang ist es weiterhin bevorzugt, dass die edelmetallhaltige Zusammensetzung, welche im Verfahrensschritt i) bereitgestellte wird, zu mindestens 25 Gew.-%, besonders bevorzugt zu mindestens 30 Gew.-% und am meisten bevorzugt zu mindestens 35 Gew.-%, jeweils bezogen auf das Gesamtgewicht der im Verfahrenschritt i) bereitgestellten edelmetallhaltigen Zusammensetzung, SiO₂ enthält.

Vorzugsweise ist die im Verfahrensschritt i) bereitgestellte edelmetallhaltige Zusammensetzung erhältlich durch das in Kontakt bringen eine edelmetallhaltigen Rückstandes, aus dem das Edelmetall zurückgewonnen werden soll, mit einem mit organischen Gruppen funktionalisierten, auf einem anorganischen Material basierenden Adsorptionsmittel, vorzugsweise durch das in Kontakt bringen eines edelmetallhaltigen Rückstandes mit einem mit organischen Gruppen funktionalisierten Kieselgel. Als Edelmetalle kommen dabei beispielsweise Gold, Platin, Iridium, Palladium, Osmium, Silber, Quecksilber, Polonium, Ruthenium, Rhodium, Kupfer, Bismut, Technetium, Rhenium und Antimon in Betracht, wobei Gold, Platin, Iridium, Palladium, Osmium, Silber, Ruthenium, Rhodium, Kupfer, Bismut, Technetium und Rhenium besonders bevorzugt und Platin und Rhodium am meisten bevorzugt sind.

Bei dem edelmetallhaltigen Rückstand, aus der das Edelmetall gewonnen werden soll, kann es sich beispielsweise um ein Abwasser aus einer Mine oder eines galvanischen oder metallurgischen Betriebes handeln. Denkbar sind weiterhin Produktionsrückstände aus organischen Syntheseprozessen, in denen edelmetallhaltige Katalysatoren eingesetzt werden und bei denen zumindest ein Teil des Katalysatormaterials im Verlaufe der organischen Synthese in die Produktphase gelangt. Um aus derartigen edelmetallhaltigen Rückständen die Edelmetalle mittels Scavengermaterialien zu adsorbieren, werden die in der Regel partikulären Materialien mit den vorzugsweise in Form einer flüssigen Phase vorliegenden edelmetallhaltigen Rückständen in Kontakt gebracht, wobei dieses in Kontakt bringen vorzugsweise bei einer Temperatur in einem Bereich von 60 bis 120°C besonders bevorzugt bei einer Temperatur in einem Bereich von 80 bis 100°C erfolgt. Dies kann beispielsweise dadurch geschehen, dass die Scavengermaterialien in die Rückstände eingerührt und nach einer bestimmten Kontaktzeit, die üblicherweise in einem Bereich von 5 Minuten bis 5 Stunden, besonders bevorzugt in einem Bereich von 30 Minuten bis 2,5 Stunden liegt und während derer die Mischung aus dem edelmetallhaltigen Rückstand und dem Scavengermaterial gerührt wird, von dem Rückstand abgetrennt werden. Das Abtrennen des nunmehr mit dem Edelmetall beladenen Scavengermaterials vom Rückstand kann beispielsweise durch Filtrations-, Sedimentations- oder Zentrifugationsprozesse erfolgen. Denkbar und erfindungsgemäß bevorzugt ist weiterhin, das Scavengermaterial beispielsweise in einer Säule vorzulegen und den edelmetallhaltigen Rückstand dann durch die Säule hindurchlaufen zu lassen. Auch auf diese Weise kann das Scavengermaterial mit den Edelmetallen beladen werden.

Üblicherweise beinhaltet die im Verfahrensschritt i) bereitgestellte edelemetallhaltige Zusammensetzung neben dem mit dem Edelmetall beladenen Adsorptionsmittel auch noch organische Materialien aus den vorstehend beschriebenen Rückständen, wobei die Menge derartiger organischer Materialien in einem Bereich von 10 bis 50 Gew.-%, insbesondere in einem Bereich von 20 bis 40 Gew.-%, jeweils bezogen auf das Gesamtgewicht der im Verfahrensschritt i) bereitgestellten edelmetallhaltigen Zusammensetzung, liegen kann.

Im Verfahrensschritt ii) des erfindungsgemäßen Verfahrens wird sodann die im Verfahrensschritt i) bereitgestellte edelmetallhaltige Zusammensetzung unter Erhalt einer veraschten Zusammensetzung verascht, um einen Gehalt an Rest-Kohlenstoff von höchstens 10 Gew.-%, besonders bevorzugt von höchstens 5 Gew.-%, noch mehr bevorzugt von höchstens 3,5 Gew.-% und am meisten bevorzugt von höchstens 2,0 Gew.-%, jeweils bezogen auf das Gesamtgewicht der edelmetallhaltigen Zusammensetzung nach dem Veraschen, einzustellen. Bei diesem Veraschungsvorgang, bei dem zumindest ein Teil der funktionellen Gruppen des Adsorptionsmittels und ein Teil des gegebenfalls in der Zusammensetzung ebenfalls enthaltenen weiteren organischen Materials entfernt wird, wird vorzugsweise ein Glühverlust von mindestens 40 Gew.-%, besonders bevorzugt von mindestens 45 Gew.-% und am meisten bevorzugt von mindestens 50 Gew.-% erzielt.

Das Veraschen im Verfahrensschritt ii) erfolgt vorzugsweise bei einer Temperatur von mindestens 500°C, besonders bevorzugt von mehr als 700°C und am meisten bevorzugt von mindestens 800°C für eine Dauer von vorzugsweise mindestens 2 Stunden, mehr bevorzugt mindestens 4 Stunden, noch mehr bevorzugt mindestens 6 Stunden und besonders bevorzugt mindestens 10 Stunden. Üblicherweise wird das Veraschen unter Luftatmosphäre durchgeführt. Vorzugsweise wird beim Veraschen eine Temperatur von 1.200°C, besonders bevorzugt von 1.100°C und am meisten bevorzugt von 1.000°C nicht überschritten.

Das Veraschen der edelmetallhaltigen Zusammensetzung im Verfahrensschritt ii) kann gegebenenfalls auch zwei oder mehrstufig erfolgen, beispielsweise so wie dies in der WO 2007/036334 beschrieben ist. Dabei kann beispielsweise die edelmetallhaltige Zusammensetzung in einer ersten Stufe in einer Stickstoffatmosphäre oder einer Luftatmosphäre unter den vorstehend beschriebenen Temperaturbedingungen und für die vorstehend beschriebene Dauer erhitzt werden, um einen ersten Teil der funktionellen Gruppen des Adsorptionsmittels und einen ersten Teil des gegebenenfalls in der Zusammensetzung ebenfalls enthaltenen weiteren organischen Materials zu entfernen. Anschließend kann ein weiteres Erhitzen, gegebenenfalls nachdem das bereits teilweise veraschte Material noch einmal durchmischt worden ist, erfolgen, vorzugsweise ein weiteres Erhitzen unter den vorstehend beschriebenen Temperaturbedingungen und für die vorstehend beschriebene Dauer, um den Gehalt an Kohlenstoff noch weiter zu reduzieren. Dieses weitere Erhitzen erfolgt vorzugsweise in Gegenwart von Sauerstoff, besonders bevorzugt unter Luftatmosphäre. Durch dieses zweitstufige Verfahren kann ein besonders effizientes Veraschen realisiert werden.

Im Verfahrensschritt iii) des erfindungsgemäßen Verfahrens wird sodann die im Verfahrensschritt ii) erhaltene, veraschte Zusammensetzung in einer alkalischen, wässrigen Lösung unter Erhalt eines edelmetallhaltigen Rückstandes zumindest teilweise aufgelöst. Bei diesem Verfahrensschritt werden in erster Linie die anorganischen Materialien, auf denen das im Verfahrensschritt i) bereitgestellte anorganische Material basierte, vorzugsweise also das Kieselgel, zumindest teilweise aufgelöst. Vorzugsweise erfolgt dieses Auflösen dadurch, dass die veraschte Zusammensetrung mit einer wässrigen NaOH- oder KOH-Lösung, ganz besonders bevorzugt mit einer wässrigen NaOH-Lösung, vermischt und dann diese Mischung, gegebenenfalls unter Druck, auf eine Temperatur in einem Bereich von 50 bis 300°C, besonders bevorzugt 70 bis 200°C für eine Dauer in einem Bereich von 30 Minuten bis 10 Stunden, besonders bevorzugt in einem Bereich von 1,5 bis 8,5 Stunden erhitzt wird.

Die Konzentration der eingesetzten wässrigen alkalischen Lösung beträgt mindestens 10 Gew.-%, noch mehr bevorzugt mindestens 15 Gew.-% und am meisten bevorzugt mindestens 20 Gew.-%, wobei die Konzentration üblicherweise in einem Bereich von 20 bis 55 Gew.-%,, jeweils bezogen auf das Gesamtgewicht der im Verfahrensschritt iii) eingesetzten alkalischen, wässrigen Lösung, liegt

In diesem Zusammenhang ist es besonders bevorzugt, dass das zumindest teilweise Auflösen des im Verfahrensschritt ii) erhaltenen, veraschten Zusammensetzung in der alkalischen, wässrigen Lösung im Verfahrensschritt iii) in Gegenwart eines Reduktionsmittels erfolgt. Durch den Zusatz eines Reduktionsmittels während des Auflösens kann verhindert werden, dass bereits zu diesem Zeitpunkt das Edelmetall in Lösung geht.

Bei dem Reduktionsmittel handelt es sich vorzugsweise um ein organisches Reduktionsmittel, um Hydrazin oder um Wasserstoffgas, wobei als organische Reduktionsmittel insbesondere solche ausgewählt aus der Gruppe bestehend aus Ameisensäure oder einem Salz der Ameisensäure, Formaldehyd, Alkohole (zum Beispiel Methanol oder Ethanol), Ascorbinsäure, Glukose, Gluconsäure, Ascorbinsäure und Oxalsäure bevorzugt sind.

Die Menge an Reduktionsmittel, welches im Verfahrensschritt iii) eingesetzt wird, kann in einem Bereich von 1 mg bis 2.500 mg pro Gramm veraschtem Adsorptionsmittel, besonders bevorzugt in einem Bereich von 5 mg bis 1.000 mg pro Gramm veraschtem Adsorptionsmittel und am meisten bevorzugt in einem Bereich von 10 mg bis 100 mg pro Gramm veraschter Zusammensetzung liegen. Die Konzentration an Reduktionsmittel in der im Verfahrensschritt iii) eingesetzten alkalischen, wässrigen Lösung kann in einem Bereich von 0,1 bis 10 Gew.-%, besonders bevorzugt in einem Bereich von 0,5 bis 5 Gew.-%, jeweils bezogen auf das Gesamtgewicht der im Verfahrensschritt iii) eingesetzten alkalischen, wässrigen Lösung, liegen.

Neben dem Reduktionsmittel können der alkalischen, wässrigen Lösung auch weitere Additive zugesetzt werden, wobei insbesondere der Zusatz von Absetzmitteln bevorzugt ist, sofern die Abtrennung des edelmetallhaltigen Rückstandes durch Sedimentation erfolgen soll, bei der die alkalische wässrige Lösung durch Dekantieren vom edelmetallhaltigen Rückstand abgetrennt wird.

Nach dem Auflösen des veraschten Adsorptionsmittels in der vorstehend beschriebenen Art und Weise kann der dabei erhaltene, edelmetallhaltige Rückstand beispielsweise durch Filtration, Sedimentation oder Zentrifugation, vorzugsweise jedoch durch Sedimentation, von der Lösung abgetrennt, und, nachdem er gegebenenfalls mit Wasser oder wässriger Lösung gewaschen wurde, dem weiteren Verfahrensschritt iv) zugeführt werden. Sofern das Abtrennen des edelmetallhaltigen Rückstandes durch Filtration unter Verwendung von Filterpapier erfolgt, kann es sich als vorteilhaft erweisen, vor der Durchführung des Verfahrensschrittes iv) einen weiteren Veraschungsschritt vorzusehen, um das Filterpapier zu entfernen.

Im Verfahrensschritt iv) wird sodann der edelmetallhaltige Rückstand in einer oxidierenden, wässrigen Säure unter Erhalt einer wässrigen Salzlösung des Edelmetalls, vorzugsweise in einer wässrigen Lösung des Chlorid-Salzes des Edelmetalls, zumindest teilweise aufgelöst ("*geleacht*"). Insbesondere im Falle von Rhodium als zu gewinnendes Edelmetall kann es sich jedoch auch noch als vorteilhaft erweisen, den im Verfahrensschritt iii) erhaltenen edelmetallhaltigen Rückstand vor dem Verfahrensschritt iv) noch weiter zu reduzieren, wobei diese Reduktion vorzugsweise im Wasserstoffstrom erfolgt. Die Reduktion im Wasserstoffstrom erfolgt vorzugsweise bei Temperaturen in einem Bereich von 200 bis 600°C, besonders bevorzugt in einem Bereich von 300 bis 500°C für eine Dauer von 1 bis 24 Stunden, besonders bevorzugt 4 bis 10 Stunden.

Das zumindest teilweise Auflösen des im Verfahrensschritt iii) erhaltenen edelmetallhaltigen Rückstandes in einer oxidierenden, wässrigen Säure unter Erhalt einer wässrigen Salzlösung des Edelmetalls im Verfahrensschritt iv) erfolgt vorzugsweise in Salpetersäure, in einer Mischung beinhaltend Salzsäure und Salpetersäure, beispielsweise in Königswasser, oder in Salzsäure beinhaltend ein Oxidationsmittel, beispielsweise in Salzsäure beinhaltend Chlorgas oder in Salzsäure beinhaltend Chlorat. Das Auflösen des edelmetallhaltigen Rückstandes in der oxidierenden Säure erfolgt vorzugsweise bei einer Temperatur in einem Bereich von 30 bis 200°C, besonders bevorzugt in einem Bereich von 60 bis 100°C. Die Säure-Konzentration der im Verfahrensschritt iv) eingesetzten Säure beträgt vorzugsweise mindestens 10 Gew.-%, besonders bevorzugt mindestens 20 Gew.-% und am meisten bevorzugt mindestens 30 Gew.-%, jeweils bezogen auf das Gesamtgewicht der im Verfahrensschritt iv) eingesetzten oxidierenden, wässrigen Säure.

Im Verfahrensschritt v) des erfindungsgemäßen Verfahrens kann dann gegebenenfalls das Edelmetall aus dem im Verfahrensschritt iv) erhaltenen Edelmetall-Salz gewonnen werden. Diese Gewinnung kann auf eine dem Fachmann bekannte Weise, zum Beispiel durch Reduktion des im Verfahrensschritt iv) erhaltenen Edelmetall-Salzes, beispielsweise durch Elektrolyse, erfolgen. Vorzugsweise werden dabei die Edelmetalle mit einer Relnheit von mindestens 90 %, besonders bevorzugt von mindestens 95 % und am meisten bevorzugt von mindestens 99 % erhalten.

In der Regel wird der Fachmann versuchen, geringe Flüssigkeitsmengen bei möglichst geringen Edelmetallkonzentrationen zu erhalten.

Beträgt z.B. die Wassermenge bzw. der Menge an Natronlauge in Gramm in Schritt iii) etwa das zehn bis fünfzehnfache der Masse des zu behandelnden Rückstandes, der z. B. 1 bis 5 Gew % Edelmetall enthält, gelingt es im Allgemeinen, über dem edelmetallhaltigen Rückstand eine Lösung mit sehr geringen Edelmetallkonzentrationen von < 5mg/l und sogar < 1 mg/l zu erhalten. Dies zeigen etwa die folgenden Beispiele 2 bis 4. Die weitere Aufarbeitung derartiger Lösungen lohnt sich in der Regel nicht, und sie können verworfen werden.
Nach Schritt iii) beobachtet man im Allgemeinen eine Abnahme der Gesamtmasse des eingesetzten beladenen Scavengers um über 90, insbesondere über 95%, das bedeutetet, dass der Edelmetallgehalt im Rückstand um das bis zu 20 fache aufkonzentriert werden kann.

Die Erfindung wird nun anhand nicht limitierender Beispiele näher erläutert.

### BEISPIELE

### Beispiel 1

56,9 g Scavenger (es wurde das Produkt PhosphonicS™ 16-0650 von der Firma Strem Chemicals, Inc., USA, eingesetzt) beladen mit 1,60 Gew.-% Rhodium und nicht näher spezifizierten Resten organischen Prozessrückstands aus einem homogen katalytischen Prozess wurden zur Entfernung aller organischen Komponenten bei 800°C unter Luftatmosphäre für 8 h geglüht. Es wurden 25,5 g der kieseigelhaltigen Asche erhalten, was einem Glühverlust von 55 % entspricht. Der Restkohlenstoffgehalt betrug 1,6 %, der Rh-Gehalt wurde zu 3,56 % (0,91 g) analysiert.

### Beispiel 2

In einem Druckautoklaven wurden 25 g einer analog Beispiel 1 erhaltenen rhodiumhaltigen Asche mit 250 ml 45 %iger Natronlauge und 1 g Natriumformiat für 4 h auf 180°C erhitzt. Anschließend ließ man abkühlen und dekantierte die überstehende Lösung ab. Die überstehende Lösung enthielt < 1 mg/l Rh. Der Rückstand wurde auf der Filtemutsche mit Wasser gewaschen und getrocknet. Die Auswaage betrug 0,5 g des angereicherten Rückstands.

### Beispiel 3

In einem Druckautoklaven wurden 18,5 g einer analog Beispiel 1 erhaltenen rhodiumhaltigen Asche zusammen mit 185 ml 45 %iger NaOH-Lösung und 1 g Natriumformiat für 8 h auf 180°C erhitzt. Anschließend ließ man abkühlen und dekantierte die überstehende Lösung ab. Die überstehende Lösung enthielt < 1 mg/l Rh. Der Rückstand wurde auf der Filternutsche mit Wasser gewaschen und getrocknet. Die Auswaage betrug 3,8 g des angereicherten Rückstands.

### Beispiel 4

25,5 g einer analog Beispiel 1 erhaltenen rhodiumhaltigen Asche wurden zu 350 ml 31 %iger NaOH-Lösung gegeben und nach Zutropfen von 14 ml 22 %iger Hydrazinlösung im offenen Behälter für 3 h auf 80°C erhitzt. Anschließend gab man 50 bis 100 ml Wasser und 20 ml Absetzmittel (Praestol^{®}, Copolymer aus Acrylsäure und Acrylamid, Ashland Deutschland GmbH) zu, ließ absitzen und dekantierte anschließend vom Rückstand. Der Rückstand wurde filtriert und mit Wasser gewaschen; nach dem Trocknen betrug dessen Masse 2 g. Die dekantierte Lösung enthielt 3 mg/l Rhodium, so dass diese verworfen wurde.

### Beispiel 5

Der Rückstand aus Beispiel 4 wurde für 7 h bei 400°C im Wasserstoffstrom reduziert und anschließend in einer Apparatur bei 60°C in 32 %iger Salzsäure durch Einleiten von Chlorgas für 15 Stunden geleacht. Die rhodiumhaltige Salzsäure wurde zwischendurch einmal durch frische 32 %ige Salzsäure ersetzt. Der Rh-Gehalt der vereinigten Salzsäurelösung wurde mittels ICP zu 0,91 g Rh analysiert.

### Beispiel 6

94,9 g Scavenger (es wurde das Produkt PhosphonicS™ 16-1700 von der Firma Strem Chemicals, Inc., USA, eingesetzt) beladen mit Platin und nicht näher spezifizierten Resten organischen Prozessrückstands aus einem homogen katalytischen Prozess zur Silikonherstellung wurde zur Entfernung aller organischen Komponenten bei 800°C unter Luftatmosphäre für 8 h geglüht. Es wurden 48,0 g der kieseigelhaltigen Asche erhalten, was einem Glühverlust von 49 % entspricht. Der Restkohlenstoffgehalt betrug 200 ppm, der Pt-Gehalt wurde zu 1,10 % (0,528 g) analysiert.

### Beispiel 7

20,1 g einer analog Beispiel 6 erhaltenen platinhaltigen Asche wurden zusammen mit 270 ml 31 % iger NaOH-Lösung und 4 ml Ameisensäure im offenen Behälter für 4 h auf 80°C erhitzt. Anschließend wurde die Suspension nach dem Abkühlen auf 60°C filtriert Nach dem Waschen mit Wasser erhielt man 1,35 g Rückstand. Im alkalischen Filtrat konnte kein Platin mittels ICP nachgewiesen werden.

### Beispiel 8

Der Rückstand aus Beispiel 7 wurde bei 80 bis 100°C in 600 ml Königswasser geleacht und der Pt-Gehalt mittels ICP bestimmt: 0,22 g.

### Beispiel 9

20,2 g einer analog Beispiel 6 erhaltenen platinhaltigen Asche wurden zusammen mit 270 ml 31 % iger NaOH-Lösung und 9 ml 22%ige Hydrazin im offenen Behälter für 3 h auf 80°C erhitzt.. Anschließend wurde die Suspension nach dem Abkühlen auf 60°C filtriert. Nach dem Waschen mit Wasser erhielt man 1,41 g Rückstand. Im alkalischen Filtrat konnte kein Platin mittels ICP nachgewiesen werden.

### Beispiel 10

Der Rückstand aus Beispiel 7 wurde bei 80 bis 100°C in 600 ml Königswasser geleacht und der Pt-Gehalt mittels ICP bestimmt: 0,22 g.

## Patentansprüche

1. Ein Verfahren zur Gewinnung von Edelmetallen aus edelmetallhaltigen Zusammensetzungen, beinhaltend die Verfahrensschritte:
i) Bereitstellung einer edelmetallhaltigen Zusammensetzung beinhaltend ein auf einem anorganischen Material basierendes Adsorptionsmittel, welches mit organischen Gruppen funktionalisiert ist und welches mindestens ein Edelmetall adsorbiert hat;
ii) Veraschung der im Verfahrensschritt i) bereitgestellten edelmetallhaltigen Zusammensetzung, um einen Gehalt an Rest-Kohlenstoff von höchstens 10 Gew.-%, bezogen auf das Gesamtgewicht der edelmetallhaltigen Zusammensetzung nach dem Veraschen, einzustellen, unter Erhalt einer veraschten Zusammensetzung;
iii) zumindest teilweises Auflösen der im Verfahrensschritt ii) erhaltenen, veraschten Zusammensetzung in einer alkalischen, wässrigen Lösung unter Erhalt eines edelmetallhaltigen Rückstandes;
iv) zumindest teilweises Auflösen des im Verfahrensschritt iii) erhaltenen edelmetallhaltigen Rückstandes in einer oxidierenden, wässrigen Säure unter Erhalt einer wässrigen Salzlösung des Edelmetalls;
v) gegebenenfalls Gewinnung des Edelmetalls durch Reduktion des im Verfahrensschritt iv) erhaltenen Edelmetall-Salzes,
wobei das Auflösen im Verfahrensschritt iii) dadurch erfolgt, dass die veraschte Zusammensetzung mit einer 10 bis 55 gew.-%igen wässrigen NaOH- oder KOH-Lösung vermischt und dann diese Mischung auf eine Temperatur in einem Bereich von 50 bis 300 °C für eine Dauer in einem Bereich von 30 Minuten bis 10 Stunden erhitzt wird, wobei sich die Konzentration von 10 bis 55 Gew.-% auf das Gesamtgewicht der im Verfahrensschritt iii) eingesetzten alkalischen, wässrigen Lösung bezieht.

2. Das Verfahren nach Anspruch 1, wobei das auf einem anorganischen Material basierende Adsorptionsmittel ein auf einem Kieselgel oder einem Aluminiumoxid-Gel basierendes Adsorptionsmittel ist.

3. Das Verfahren nach Anspruch 1 oder 2, wobei das auf einem anorganischen Material basierende Adsorptionsmittel mit 0,1 bis 1,5 mmol/g organischen Gruppen funktionalisiert ist.

4. Das Verfahren nach einem der vorhergehenden Ansprüche, wobei die im Verfahrensschritt i) bereitgestellte edelmetallhaltige Zusammensetzung mindestens 0,5 Gew.-%, bezogen auf das Gesamtgewicht der im Verfahrensschritt i) bereitgestellten edelmetallhaltigen Zusammensetzung, Edelmetall enthält.

5. Das Verfahren nach einem der vorhergehenden Ansprüche, wobei die im Verfahrensschritt i) bereitgestellte edelmetallhaltige Zusammensetzung erhältlich ist durch das in Kontakt bringen eines edelmetallhaltigen Rückstandes mit einem mit organischen Gruppen funktionalisierten, auf einem anorganischen Material basierenden Adsorptionsmittel.

6. Das Verfahren nach einem der vorhergehenden Ansprüche, wobei die Veraschung der im Verfahrensschritt i) bereitgestellten edelmetallhaltigen Zusammensetzung im Verfahrensschritt ii) bei einer Temperatur von über 700°C erfolgt.

7. Das Verfahren nach Anspruch 6, wobei die Veraschung der im Verfahrensschritt i) bereitgestellten edelmetallhaltigen Zusammensetzung im Verfahrensschritt ii) für eine Dauer von mindestens zwei Stunden erfolgt.

8. Das Verfahren nach einem der vorhergehenden Ansprüche, wobei das zumindest teilweise Auflösen der im Verfahrensschritt ii) erhaltenen, veraschten Zusammensetzung in einer alkalischen, wässrigen Lösung unter Erhalt eines edelmetallhaltigen Rückstandes im Verfahrensschritt iii) in Gegenwart eines Reduktionsmittels erfolgt.

9. Das Verfahren nach Anspruch 8, wobei das Reduktionsmittel ein organisches Reduktionsmittel, Hydrazin oder Wasserstoffgas ist.

10. Das Verfahren nach Anspruch 9, wobei das organische Reduktionsmittel ausgewählt ist aus der Gruppe bestehend aus Ameisensäure oder einem Salz der Ameisensäure, Formaldehyd, Alkohole, Ascorbinsäure, Glukose, Gluconsäure, Ascorbinsäure und Oxalsäure.

11. Das Verfahren nach einem der vorhergehenden Ansprüche, wobei der im Verfahrensschritt iii) erhaltene edelmetallhaltige Rückstand vor dem Verfahrensschritt iv) im Wasserstoffstrom reduziert wird.

12. Das Verfahren nach einem der vorhergehenden Ansprüche, wobei der im Verfahrenschritt iii) erhaltene edelmetallhaltige Rückstand gegenüber dem in Schritt i) eingesetzten Material eine Abnahme der Gesamtmasse um über 90 % erfahren hat.

13. Das Verfahren nach Anspruch 12, wobei die Abnahme der Gesamtmasse bei über 95% liegt.

14. Das Verfahren nach einem der vorhergehenden Ansprüche, wobei das zumindest teilweise Auflösen des im Verfahrensschritt iii) erhaltenen edelmetallhaltigen Rückstandes in einer oxidierenden, wässrigen Säure unter Erhalt einer wässrigen Salzlösung des Edelmetalls im Verfahrensschritt iv) in Salpetersäure, in einer Mischung beinhaltend Salzsäure und Salpetersäure, in Salzsäure beinhaltend Chlorgas oder in Salzsäure beinhaltend Chlorat erfolgt.

## Claims

1. Method for recovery of noble metals from noble metal-containing compositions, including the procedural steps:
i) providing a noble metal-containing composition containing an adsorption agent that is based on an inorganic material and is functionalised by organic groups and has at least one noble metal adsorbed to it;
ii) ashing of the noble metal-containing composition provided in procedural step i) in order to adjust a residual carbon content of at most 10 % by weight, relative to the total weight of the noble metal-containing composition after ashing, to obtain an ashed composition;
iii) at least partial dissolution of the ashed composition obtained in procedural step ii) in an alkaline aqueous solution to obtain a noble metal-containing residue;
iv) at least partial dissolution of the noble metal-containing residue obtained in procedural step iii) in an oxidising aqueous acid to obtain an aqueous salt solution of the noble metal;
v) recovering, if applicable, the noble metal through reduction of the noble metal salt obtained in procedural step iv);
whereby the dissolution in procedural step iii) involves mixing the ashed composition with a 10 to 55% by weight aqueous NaOH or KOH solution and then heating said mixture to a temperature in the range of 50 to 300°C for a period of time in the range from 30 minutes to 10 hours, whereby the concentration of 10 to 55% by weight is relative to the total weight of the alkaline aqueous solution used in procedural step iii).

2. Method according to claim 1, whereby the adsorption agent that is based on an inorganic material is a silica gel- or an aluminium oxide gel-based adsorption agent.

3. Method according to claim 1 or 2, whereby the adsorption agent that is based on an inorganic material is functionalised by 0.1 to 1.5 mmol/g organic groups.

4. Method according to any one of the preceding claims, whereby the noble metal-containing composition provided in procedural step i) contains at least 0.5 % by weight of noble metal, relative to the total weight of the noble metal-containing composition provided in procedural step i).

5. Method according to any one of the preceding claims, whereby the noble metal-containing composition provided in procedural step i) can be obtained by contacting a noble metal-containing residue and an adsorption agent that is functionalised by organic groups and based on an inorganic material.

6. Method according to any one of the preceding claims, whereby the ashing of the noble metal-containing composition provided in procedural step i) proceeds at a temperature above 700°C in procedural step ii).

7. Method according to claim 6, whereby the ashing of the noble metal-containing composition provided in procedural step i) proceeds for a period of time of at least two hours in procedural step ii).

8. Method according to any one of the preceding claims, whereby the at least partial dissolution of the ashed composition obtained in procedural step ii) in an alkaline aqueous solution to obtain a noble metal-containing residue proceeds in the presence of a reducing agent in procedural step iii).

9. Method according to claim 8, whereby the reducing agent is an organic reducing agent, hydrazine or hydrogen gas.

10. Method according to claim 9, whereby the organic reducing agent is selected from the group consisting of formic acid or a formic acid salt, formaldehyde, alcohols, ascorbic acid, glucose, gluconic acid, ascorbic acid, and oxalic acid.

11. Method according to any one of the preceding claims, whereby the noble metal-containing residue obtained in procedural step iii) is reduced in a hydrogen stream prior to procedural step iv).

12. Method according to any one of the preceding claims, whereby the noble metal-containing residue obtained in procedural step iii) suffered a loss of total mass by more than 90 % as compared to the material used in procedural step i).

13. Method according to claim 12, whereby the loss of total mass exceeds 95 %.

14. Method according to any one of the preceding claims, whereby the at least partial dissolution of the noble metal-containing residue obtained in procedural step iii) in an oxidising aqueous acid to obtain an aqueous salt solution of the noble metal in procedural step iv) proceeds in nitric acid, in a mixture containing hydrochloric acid and nitric acid, in hydrochloric acid containing chlorine gas or in hydrochloric acid containing chlorate.

## Revendications

1. Procédé d'extraction de métaux précieux de compositions comportant un ou plusieurs métaux précieux, comprenant les étapes de procédé :
i) mise à disposition d'une composition contenant un ou plusieurs métaux précieux et un adsorbant basé sur un matériau inorganique, ledit adsorbant étant fonctionnalisé avec des groupes organiques et ayant adsorbé au moins un métal précieux ;
ii) incinération de la composition contenant un ou plusieurs métaux précieux mise à disposition à l'étape de procédé i), pour faire apparaître une teneur en carbone résiduel d'un maximum de 10 % poids, qui se rapporte au poids total de la composition contenant un ou plusieurs métaux précieux après l'incinération, avec l'obtention d'une composition réduite en cendres ;
iii) dissolution au moins partielle de la composition réduite en cendres et obtenue à l'étape de procédé ii) dans une solution aqueuse alcaline avec l'obtention d'un résidu contenant un ou plusieurs métaux précieux ;
iv) dissolution au moins partielle du résidu contenant un ou plusieurs métaux précieux obtenu à l'étape de procédé iii) dans un acide aqueux oxydant avec l'obtention d'une solution saline aqueuse du métal précieux ;
v) extraction éventuelle du métal précieux par réduction du sel de métal précieux obtenu à l'étape de procédé iv),
la dissolution de l'étape de procédé iii) s'opérant par le fait que la composition réduite en cendres soit mélangée avec une solution de NaOH ou de KOH de 10 à 55 % poids et que ce mélange soit ensuite chauffé à une température comprise dans une plage de 50 à 300 °C pendant une durée allant de 30 minutes jusqu'à 10 heures, la concentration de 10 à 55 % poids se rapportant au poids total de la solution aqueuse alcaline utilisée à l'étape de procédé iii).

2. Le procédé selon la revendication 1, **caractérisé en ce, que** l'adsorbant basé sur un matériau inorganique soit un adsorbant basé sur un gel de silice ou un gel d'oxyde d'aluminium.

3. Le procédé selon la revendication 1 ou 2, **caractérisé en ce, que** l'adsorbant basé sur un matériau inorganique soit fonctionnalisé avec des groupes organiques de 0,1 à 1,5 mmol/g.

4. Le procédé selon l'une des revendications précédentes, **caractérisé en ce, que** la composition contenant un ou plusieurs métaux précieux mise à disposition à l'étape de procédé i) contienne au moins 0,5 % poids de métal précieux, 0,5 % poids se rapportant au poids total de la composition contenant un ou plusieurs métaux précieux mise à disposition au cours de l'étape de procédé i).

5. Le procédé selon l'une des revendications précédentes, **caractérisé en ce, que** la composition contenant un ou plusieurs métaux précieux mise à disposition à l'étape de procédé i) puisse être obtenue par la mise en contact d'un résidu contenant un ou plusieurs métaux précieux avec un adsorbant basé sur un matériau inorganique et fonctionnalisé avec des groupes organiques.

6. Le procédé selon l'une des revendications précédentes, **caractérisé en ce que** l'incinération de la composition contenant un ou plusieurs métaux précieux mise à disposition à l'étape de procédé i) s'effectue à une température supérieure à 700 °C dans l'étape de procédé ii).

7. Le procédé selon la revendication 6, **caractérisé en ce, que** l'incinération de la composition contenant un ou plusieurs métaux précieux mise à disposition à l'étape de procédé i) s'effectue sur une durée minimale de deux heures dans l'étape de procédé ii).

8. Le procédé selon l'une des revendications précédentes, **caractérisé en ce, que** la dissolution au moins partielle de la composition incinérée obtenue à l'étape de procédé ii) s'opère dans une solution aqueuse alcaline au cours de l'étape de procédé iii) avec l'obtention d'un résidu contenant un ou plusieurs métaux précieux, en présence d'un agent réducteur.

9. Le procédé selon la revendication 8, **caractérisé en ce, que** l'agent réducteur soit un agent réducteur organique, de l'hydrazine ou de l'hydrogène gazeux.

10. Le procédé selon la revendication 9, **caractérisé en ce, que** l'agent réducteur soit sélectionné dans le groupe comprenant de l'acide formique ou un sel d'acide formique, du formaldéhyde, des alcools, de l'acide ascorbique, du glucose, de l'acide gluconique et de l'acide oxalique.

11. Le procédé selon l'une des revendications précédentes, **caractérisé en ce, que** le résidu contenant un ou plusieurs métaux précieux, obtenu à l'étape de procédé iii), soit réduit avant l'étape de procédé dans le flux d'hydrogène

12. Le procédé selon l'une des revendications précédentes, **caractérisé en ce, que** le résidu contenant un ou plusieurs métaux précieux, obtenu à l'étape de procédé iii), ait subi une réduction de masse totale de plus 90 % par rapport au matériau utilisé à l'étape i).

13. Le procédé selon la revendication 12, **caractérisé en ce, que** la réduction de la masse totale soit supérieure à 95 %.

14. Le procédé selon l'une des revendications précédentes, **caractérisé en ce, que** la dissolution au moins partielle du résidu contenant un ou plusieurs métaux précieux obtenu à l'étape du procédé iii) dans un acide aqueux oxydant avec l'obtention d'une solution saline aqueuse du métal précieux dans l'étape de procédé iv), s'opère dans de l'acide nitrique, dans un mélange contenant de l'acide chlorhydrique et de l'acide nitrique, dans de l'acide chlorhydrique contenant du gaz de chlore ou dans de l'acide chlorhydrique contenant du chlorate.
